# EUROPÄISCHE PATENTSCHRIFT

(11) **EP 1 015 289 B1**
(45) Veröffentlichungstag und Bekanntmachung des Hinweises auf die Patenterteilung: **21.07.2004**
(21) Anmeldenummer: 98955401.9
(22) Anmeldetag: 17.09.1998
(51) Int. Cl.: B60S 1/52, B05B 1/08, B05B 15/06

(54) **SCHEIBENREINIGUNGSANLAGE**
WINDSCREEN CLEANER SYSTEM
LAVE-GLACE

(30) Priorität: 26.09.1997 DE 19742471
(43) Veröffentlichungstag der Anmeldung: 05.07.2000
(73) Patentinhaber: Siemens Aktiengesellschaft, 80333 München (DE)
(72) Erfinder: MARTIN, Uwe, D-36179 Bebra (DE)
(86) Internationale Anmeldenummer: PCT/EP1998/005915
(87) Internationale Veröffentlichungsnummer: WO 1999/016649

(56) Entgegenhaltungen:
- DE-A- 2 534 261
- DE-A- 3 039 663
- DE-A- 19 641 460
- FR-A- 2 162 737
- FR-A- 2 752 755
- GB-A- 2 121 318
- US-A- 3 820 716

## Beschreibung

Die Erfindung betrifft eine Scheibenreinigungsanlage für ein Kraftfahrzeug mit einem Fluidic-Düsenkörper, welcher eine Waschdüse zum Sprühen von Reinigungsflüssigkeit hat und der einen Stutzen zum Anschluss einer Reinigungsflüssigkeit zuführenden Leitung aufweist, wobei der Stutzen zumindest ein Halteteil zum unveränderlichen Befestigen an einem Karosserieteil und an seinem dem Fluidic-Düsenkörper zugewandten Ende einen Kopf hat und der Fluidic-Düsenkörper auf diesem Kopf gehalten ist.

Scheibenreinigungsanlagen der vorstehenden Art werden in heutigen Kraftfahrzeugen insbesondere zum Anspritzen der Windschutzscheibe eingesetzt und sind beispielsweise aus der DE-A-196 41 460 bekannt. Der Fluidic-Düsenkörper wird bei der bekannten Scheibenreinigungsanlage auf einem mit einem Halteteil über eine Verstelleinrichtung verbundenen Kopf befestigt. Das Halteteil wird an der Kraftfahrzeugkarosserie befestigt. Die Verstelleinrichtung ermöglicht die Verstellung des Neigungswinkels des Fluidic-Düsenkörpers. Dabei macht es sich nachteilig bemerkbar, dass der Karosseriebereich, in welchem der Fluidic-Düsenkörper befestigt wird, relativ grobe Toleranzen aufweist. Das führt dazu, dass die erforderliche, exakte Ausrichtung der Waschdüse gegenüber der Scheibe nicht immer gegeben ist. Besonders nachteilig ist das bei Scheibenreinigungsanlagen, bei denen der Reinigungsvorgang durch einfaches Aufsprühen mit der Reinigungsflüssigkeit ohne ein Nachwischen mit einem Scheibenwischer erfolgt, weil bei sol-. chen Systemen die Reinigungswirkung ein sehr exaktes Ansprühen eines bestimmten Bereiches erfordert.

Man könnte daran denken, den Fluidic-Düsenkörper als Kugelkopf auszubilden, welcher in einer Kugelpfanne einer Waschdüsenhalterung sitzt und den man nach der Montage exakt gegenüber der Scheibe ausrichten kann. Bei immer mehr Verbreitung findenden Fluidic-Düsen wäre eine solche Gestaltung jedoch sehr aufwendig, weil diese über einen relativ großen Fluidic-Düsenkörper verfügen müssen, der nicht rotationssymmetrisch gestaltet ist.

Der Erfindung liegt das Problem zugrunde, eine Scheibenreinigungsanlage der eingangs genannten Art so auszubilden, dass auf möglichst einfache Weise ein Ausrichten eines Fuidic-Düsenkörpers möglich ist.

Dieses Problem wird erfindungsgemäß dadurch gelöst, dass der Kopf als Kugelkopf ausgebildet ist und dass der Fluidic-Düsenkörper mit einer Kugelpfanne dichtend, jedoch allseitig schwenkbar und um seine Längsachse relativ zu dem Stutzen verdrehbar auf diesem Kugelkopf gehalten ist.

Bei einer solchen Scheibenreinigungsanlage befestigt man statt des Fluidic-Düsenkörpers den Stutzen an einem Karosserieteil. Dieser Stutzen ist durch ein Kugelgelenk mit dem Fluicid-Düsenkörper verbunden. Dadurch kann man den Fluidic-Düsenkörper allseitig verschwenken und zusätzlich um seine in Richtung des ausgestoßenen Flüssigkeitsstrahles verlaufende Achse verdrehen. Letzteres ist vorteilhaft, wenn die Waschdüse einen länglichen Spritzbereich hat, welcher möglichst genau in Haupterstreckungsrichtung einer anzusprühenden Scheibe ausgerichtet werden muss.

Die Montage der Scheibenreinigungsanlage kann besonders rasch vonstatten gehen, wenn die Kugelpfanne als auf den Kugelkopf aufklipsbares, elastisches Bauteil ausgebildet ist. Eine solche Ausführungsform ermöglicht es zudem, den Düsenkörper rasch auszuwechseln, wenn beispielsweise eine in ihm vorgesehene Beheizung defekt ist.

Die in heutigen Waschdüsen oftmals vorgesehenen Beheizung, durch welche ein Einfrieren bei Frost verhindert wird, lässt sich bei der erfindungsgemäßen Scheibenreinigungsanlage dadurch einfach verwirklichen, dass der Fluidic-Düsenkörper oberhalb seiner Kugelpfanne einen Kabelkanal mit einem elektrischen Kabel hat und dass innerhalb des Fluidic-Düsenkörpers oberhalb eines Fluidic-Elementes ein elektrisches Heizelement vorgesehen ist.

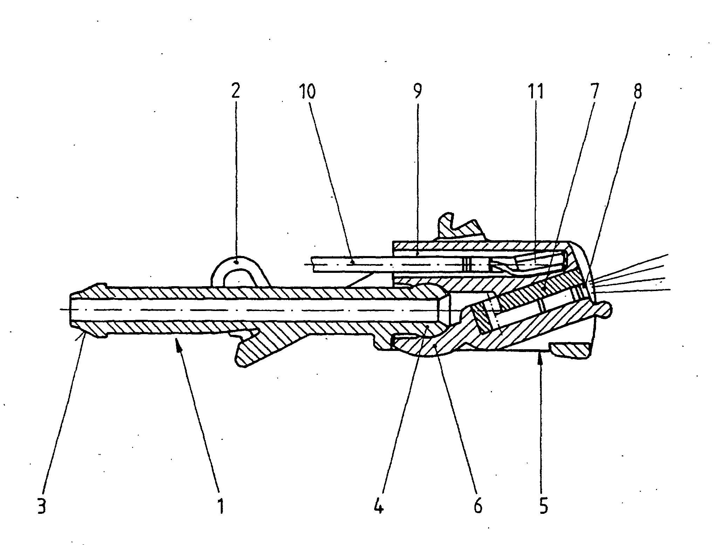

Die Erfindung lässt verschiedene Ausführungsformen zu. Eine davon ist in der Zeichnung im Längsschnitt dargestellt und wird nachfolgend beschrieben.

Die Zeichnung zeigt einen Stutzen 1, welcher an einer Seite Halteteile 2 zur unbeweglichen Befestigung an einem nicht gezeigten Karosserieteil hat.

An seinem in der Zeichnung gesehen linken Ende hat der Stutzen 1 einen Konus 3, der zum Aufschieben eines ebenfalls nicht dargestellten Schlauches zum Zuführen von Reinigungsflüssigkeit dient. An seinem anderen Ende ist der Stutzen mit einem Kugelkopf 4 versehen. Über diesen Kugelkopf 4 greift ein Fluidic-Düsenkörper 5 mit einer Kugelpfanne 6. Diese ist elastisch ausgebildet, so daß man den Fluidic-Düsenkörper 5 auf den Kugelkopf 4 aufschieben kann und er durch die Elastizität auf ihm dichtend gehalten bleibt, jedoch ein allseitiges Verschwenken und ein Verdrehen um die Längsachse des Stutzens 1 möglich ist.

In dem Fluidic-Düsenkörper 5 ist ein Fluidic-Element 7 angeordnet. Die über den Stutzen 1 zugeführte Reinigungsflüssigkeit spritzt aus einer Waschdüse 8 aus dem Fluidic-Düsenkörper 5 heraus.

Innerhalb des Fluidic-Düsenkörpers 5 verläuft oberhalb der Kugelpfanne 6 ein Kabelkanal 9, durch welchen hindurch ein Kabel 10 zu einem Heizelement 11 führt. Hierdurch ist ein elektrisches Beheizen der Waschdüse 8 und des gesamten Fluidic-Düsenkörpers 5 möglich.

## Patentansprüche

1. Scheibenreinigungsanlage für ein Kraftfahrzeug mit einem Fluidic-Düsenkörper (5), welcher eine Waschdüse (8) zum Sprühen von Reinigungsflüssigkeit hat und der einen Stutzen (1) zum Anschluss einer Reinigungsflüssigkeit führenden Leitung aufweist, wobei der Stutzen (1) zumindest ein Halteteil (2) zum unveränderlichen Befestigen an einem Karosserieteil und an seinem dem Fluidic-Düsenkörper (5) zugewandten Ende einen Kopf hat und der Fluidic-Düsenkörper (5) auf diesem Kopf (4) gehalten ist,
**dadurch gekennzeichnet, dass** der Kopf als Kugelkopf (4) ausgebildet ist und dass der Fluidic-Düsenkörper (5) mit einer Kugelpfanne (6) dichtend, jedoch allseitig schwenkbar und um seine Längsachse relativ zu dem Stutzen (1) verdrehbar auf diesem Kugelkopf (4) gehalten ist.

2. Scheibenreinigungsanlage nach Anspruch 1, **dadurch gekennzeichnet, daß** die Kugelpfanne (6) als auf den Kugelkopf (4) aufklipsbares, elastisches Bauteil ausgebildet ist.

3. Scheibenreinigungsanlage nach den Ansprüchen 1 oder 2, **dadurch gekennzeichnet, daß** der Fluidic-Düsenkörper (5) oberhalb seiner Kugelpfanne (6) einen Kabelkanal (9) mit einem elektrischen Kabel (10) hat und daß innerhalb des Fluidic-Düsenkörpers (5) oberhalb eines Fluidic-Elementes (7) ein elektrisches Heizelement (11) vorgesehen ist.

## Claims

1. Window cleaning system for a motor vehicle, having a fluidic nozzle body (5) which has a washing nozzle (8) for spraying cleaning fluid and which has a nipple for connecting a line conducting cleaning fluid, the nipple (1) having at least one holding part (2) for invariable fastening to a body part and, at its end facing the fluidic nozzle body (5) having a head, and the fluidic nozzle body (5) being held on this head (4), **characterized in that** the head is designed as a spherical head(4),and **in that** the fluidic nozzle body (5) is held by means of a ball socket (6) on this spherical head (4) sealingly, but so as to be pivotable on all sides and rotatable about its longitudinal axis relative to the nipple (1).

2. Window cleaning system according to Claim 1, **characterized in that** the ball socket (6) is designed as an elastic component capable of being snapped onto the spherical head (4).

3. Window cleaning system according to either of Claims 1 and 2, **characterized in that** the fluidic nozzle body (5) has, above its ball socket (6), a cable duct (9) with an electric cable (10), and **in that** an electric heating element (11) is provided within the fluidic nozzle body (5) above a fluidic element (7).

## Revendications

1. Installation de lave-glace pour un véhicule automobile comprenant un corps de gicleur pour fluide (5), qui a un gicleur de lavage (8) pour la pulvérisation de liquide de nettoyage et qui présente une tubulure (1) pour le raccordement d'une conduite véhiculant du liquide de nettoyage, la tubulure (1) présentant au moins une pièce de retenue (2) pour la fixation invariable sur une partie de carrosserie et une tête sur son extrémité tournée vers le corps de gicleur pour fluide (5), et le corps de gicleur pour fluide (5) étant maintenu sur cette tête (4), **caractérisé en ce que** la tête est conçue comme une tête sphérique (4) et **en ce que** le corps de gicleur pour fluide (5) est maintenu sur cette tête sphérique (4) de façon étanche avec un coussinet sphérique (6), mais en pouvant pivoter de tous côtés et en pouvant tourner autour de son axe longitudinal par rapport à la tubulure (1).

2. Installation de lave-glace selon la revendication 1, **caractérisé en ce que** le coussinet sphérique (6) est conçu comme un élément de construction élastique et enclipsable sur la tête sphérique (4).

3. Installation de lave-glace selon les revendications 1 ou 2, **caractérisé en ce que** le corps de gicleur pour fluide (5) présente au-dessus de son coussinet sphérique (6) un conduit de câble (9) avec un câble électrique (10) et **en ce qu'**un élément de chauffage (11) électrique est prévu à l'intérieur du corps de gicleur pour fluide (5) au-dessus d'un élément pour fluide (7).
